(19) Europäisches Patentamt
European Patent Office
Office européen des brevets

(11) Veröffentlichungsnummer: **0 198 349 B1**

# (12) EUROPÄISCHE PATENTSCHRIFT

(45) Veröffentlichungstag der Patentschrift: **06.09.89**

(51) Int. Cl.⁴: **C 09 B 62/09**, C 09 B 62/513, D 06 P 1/38

(21) Anmeldenummer: **86104584.7**

(22) Anmeldetag: **04.04.86**

(54) **Disazoreaktivfarbstoffe.**

(30) Priorität: **13.04.85 DE 3513261**

(43) Veröffentlichungstag der Anmeldung: **22.10.86 Patentblatt 86/43**

(45) Bekanntmachung des Hinweises auf die Patenterteilung: **06.09.89 Patentblatt 89/36**

(84) Benannte Vertragsstaaten: **CH DE FR GB LI**

(56) Entgegenhaltungen:
**EP-A- 0 040 790**
**EP-A- 0 040 806**
**DE-A- 3 113 473**
**DE-A- 3 201 114**

**Die Akte enthält technische Angaben, die nach dem Eingang der Anmeldung eingereicht wurden und die nicht in dieser Patentschrift enthalten sind.**

(73) Patentinhaber: **BAYER AG, D-5090 Leverkusen 1 Bayerwerk (DE)**

(72) Erfinder: **Jäger, Horst, Dr., Carl-Rumpff-Strasse 37, D-5090 Leverkusen (DE)**

EP 0 198 349 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Gegenstand der vorliegenden Erfindung sind Diazoreaktivfarbstoffe der Formel

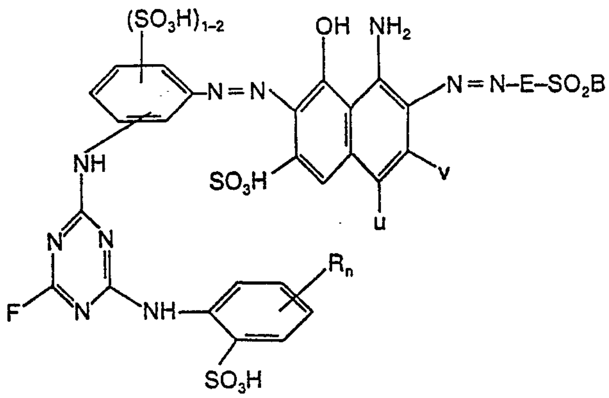

(1)

worin

B = $CH=CH_2$ oder $CH_2CH_2Z$, worin Z = abspaltbare Gruppe,

u, v = H oder $SO_3H$, wobei u ≠ v,

R = Cl, Br, $C_1$–$C_4$-Alkyl, $C_1$–$C_4$-Alkoxy, COOH, $SO_3H$, $NHCOCH_3$, $SO_2CH_2CH_2OSO_3H$,

n = 0, 1 oder 2

E = 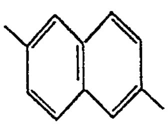

Beispiele für abspaltbare Gruppen Z sind folgende: Cl, Br, $OSO_3H$, $S_2O_3H$, $OPO_3H_2$, $O\underset{\underset{O}{\|}}{C}CH_3$.

Im Rahmen der Formel I sind folgende Farbstoffe bevorzugt:

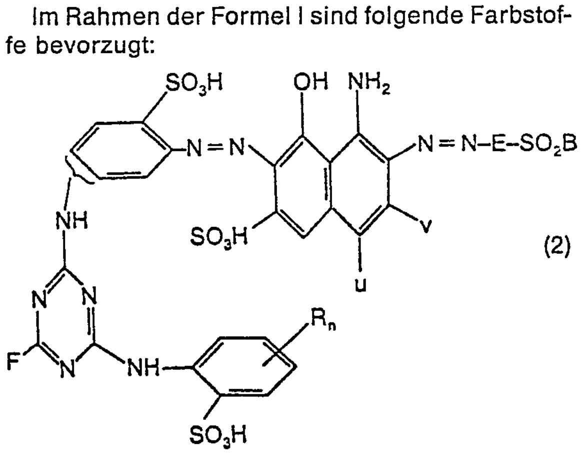

(2)

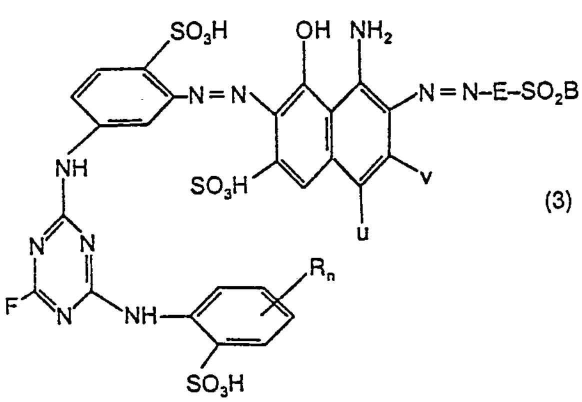

(3)

Weiterhin bevorzugt sind Farbstoffe der Formel (1), (2) und (3), in denen

B = $CH_2CH_2OSO_3H$,

u = H und

v = $SO_3H$.

Ein Verfahren zur Herstellung von Farbstoffen der Formel (1) besteht darin, daß man ein Amin der Formel

$$H_2N\text{–}E\text{–}SO_2B \quad (4)$$

diazotiert, mit einer 8-Amino-1-oxi-naphthalinsulfonsäure der Formel

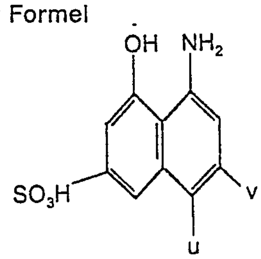

(5)

zu einer Verbindung der Formel

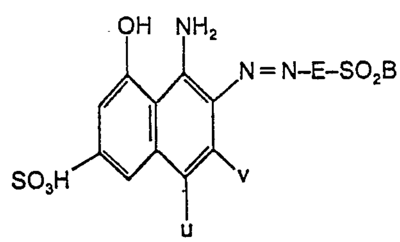

(6)

im sauren Medium kuppelt, und diesen Monoazofarbstoff mit der aus einem Amin der Formel

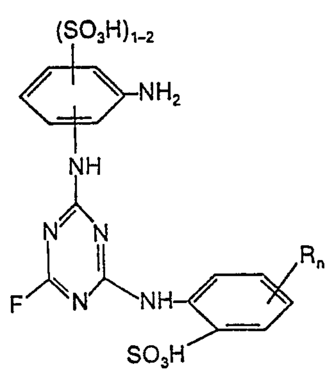

(7)

hergestellten Diazoniumverbindung im neutralen Medium zu einem Farbstoff der Formel (1) kuppelt.

Die Verbindungen der Formel (7) erhält man durch Kondensation von Diaminen der Formel

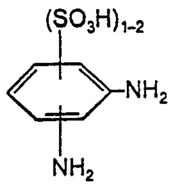
(8)

mit einer Difluortriazinverbindung der Formel

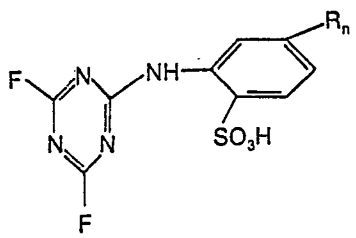
(9)

unter Abspaltung von HF in an sich bekannter Weise.

In den Verbindungen der Formel (4) bis (9) haben B, R, E, u, v und n die in Formel (1) angegebene Bedeutung.

Die Reaktionsbedingungen der Herstellung entsprechen den auf dem Gebiet der Acylierung, Diazotierung und Kupplung üblichen Bedingungen. So erfolgt die Herstellung vorzugsweise im wäßrigen Medium.

Als Ausgangsverbindungen zur Herstellung der Reaktivfarbstoffe der Formel (1) können beispielsweise genannt werden:

a) Kupplungskomponenten der Formel (5)
 1-Amino-8-oxi-naphthalin-3,6-disulfonsäure (H-Säure)
 1-Amino-8-oxi-naphthalin-4,6-disulfonsäure (K-Säure)

b) Diaminobenzolverbindungen der Formel (8)
 1,3-Diaminobenzol-4-sulfonsäure
 1,4-Diaminobenzol-2-sulfonsäure
 1,4-Diaminobenzol-2,5-disulfonsäure
 1,3-Diaminobenzol-4,6-disulfonsäure

c) Amin der Formel (4)
 2-Naphthylamin-6-β-sulfatoethylsulfon

d) Difluortriazine der Formel (9)

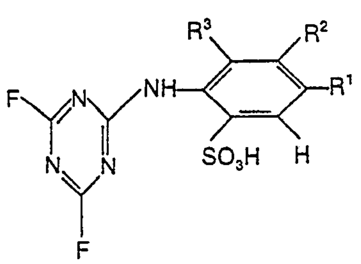

wobei $R^1$ bis $R^3$ für folgende Atome oder Atomgruppierungen steht:

| $R^1$ | $R^2$ | $R^3$ |
|---|---|---|
| H | H | H |
| Cl | H | H |
| $CH_3$ | H | H |
| $OCH_3$ | H | H |
| $OC_2H_5$ | H | H |
| COOH | H | H |
| $NHCOCH_3$ | H | H |
| H | Cl | H |
| H | $SO_3H$ | H |
| H | COOH | H |
| H | $NHCOCH_3$ | H |
| H | $OCH_3$ | H |
| Cl | H | Cl |
| Cl | H | $CH_3$ |
| Cl | $CH_3$ | H |
| $CH_3$ | Cl | H |

Die Reaktivfarbstoffe der Formel (1) können isoliert und zu trockenen Färbepräparaten verarbeitet werden. Die Isolierung erfolgt vorzugsweise bei möglichst niedrigen Temperaturen durch Aussalzen und Filtrieren. Die filtrierten Farbstoffe können gegebenenfalls nach Zugabe eines Gemisches gleicher Teile Mono- und Dinatriumphosphat getrocknet werden; vorzugsweise wird die Trocknung nicht bei zu hohen Temperaturen und unter vermindertem Druck vorgenommen.

Durch Zerstäubungstrocknung des gesamten Herstellungsgemisches kann man die erfindungsgemäßen trockenen Präparate auch direkt, d.h. ohne Zwischenisolierung der Farbstoffe herstellen.

Die Reaktivfarbstoffe der Formel (1) zeichnen sich durch hohe Reaktivität aus, und sie ergeben Färbungen mit guten Naß- und Lichtechtheiten. Besonders hervorzuheben ist es, daß die Farbstoffe eine gute Löslichkeit und Elektrolytlöslichkeit bei guten Ausziehеigenschaften und hoher Farbstoff-Fixierung aufweisen, und daß sich die nicht fixierten Anteile leicht entfernen lassen. Die Färbungen sind ätzbar.

Die neuen Farbstoffe der Formel (1) eignen sich zum Färben und Bedrucken von Hydroxyl- oder Amidgruppen enthaltenden Materialien wie Textilfasern, Fäden und Geweben aus Wolle, Seide, synthetisches Polyamid-, und Polyurethan-Fasern und zum waschechten Färben und Bedrucken von nativer und regenerierter Cellulose, wobei die Behandlung von Cellulosematerialien zweckmäßigerweise in Gegenwart säurebindender Mittel und gegebenenfalls durch Hitzeeinwirkung nach den für Reaktivfarbstoffe bekanntgewordenen Verfahren erfolgt.

Die angegebenen Formeln sind die der entsprechenden freien Säuren. Die Farbstoffe wurden im allgemeinen in Form der Alkalisalze, insbesondere der Na-Salze isoliert und zum Färben eingesetzt.

Die in den Beispielen genannten Gewichtsmengen beziehen sich auf die freie Säure. Die in den Beispielen angegebenen Farbkennzahlen beziehen sich auf Colour Index Hue Indication Chart (Indicator Numbers).

In der DE-A 3 113 473, EP-A 0 040 806 sowie der DE-A 3 201 114 werden Diazoreaktivfarbstoffe mit einerseits heterocyclischer Reaktivgruppe und andererseits Reaktivgruppe $-SO_2X$ beschrieben. Die beschriebenen Farbstoffe unterscheiden sich von den erfindungsgemäßen Farbstoffen dadurch, daß der Rest $-SO_2X$ mit einem Benzolring verknüpft ist und nicht mit einem Naphthylen-2,6-Rest.

Beispiel 1

Zu 67 g des in 500 ml Wasser gelösten Farbstoffs der Formel

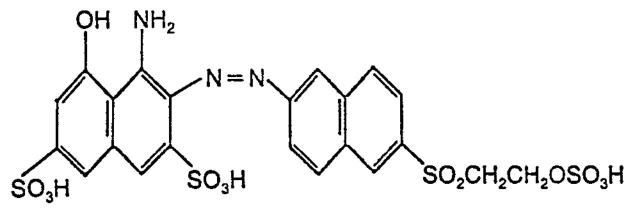

(hergestellt durch saure Kupplung von diazotiertem 2-Amino-naphthalin-6-sulfatoethylsulfon auf H-Säure) wird bei pH 6 bis 7 und 10 bis 15 °C eine Mischung aus 53,8 g diazotiertem 2-Fluor-4-(2′,5′-disulfo-phenylamino)-6-(4″-sulfo-3″amino-phenylamino)-triazin in 800 ml Wasser gegeben. Nach beendeter Kupplungsreaktion wird ausgesalzen und isoliert. Nach dem Trocknen und Mahlen fällt der Farbstoff der Formel

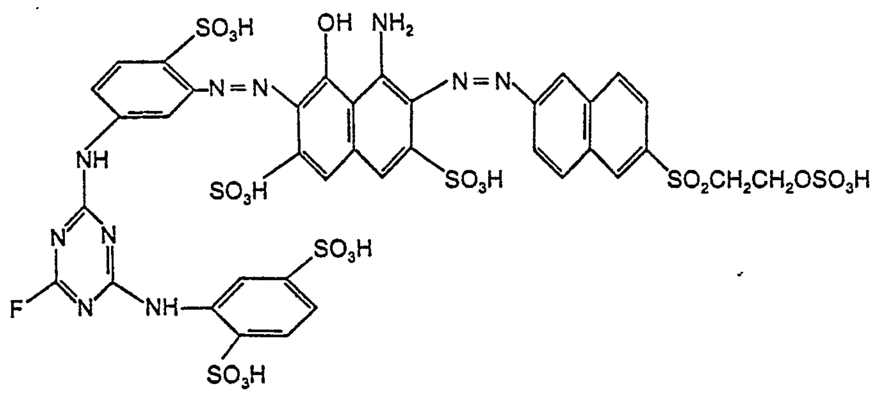

als dunkles Pulver an, das sich in Wasser mit blauer Farbe löst und Baumwolle in marineblauen (28) bis schwarzen Tönen färbt.

Die in diesem Beispiel verwendete Diazokomponente kann man wie folgt erhalten:

253 g 1-Aminobenzol-2,5-disulfonsäure werden in 4 l Eiswasser neutral gelöst. Man läßt in 20 Minuten 135 g 2,4,6-Trifluortriazin einlaufen, wobei man durch gleichzeitige Zugabe von 15% Sodalösung den pH zwischen 6 und 7 hält. Man rührt bei 0 °C 10 Minuten und prüft auf vollständige Acylierung.

Gegebenenfalls muß noch 2,4,6-Trifluortriazin nachgesetzt werden. Dann fügt man eine neutrale Lösung von 169 g 1,3-Diaminobenzol-4-sulfonsäure in 2 l Wasser hinzu. Man kondensiert 1 Stunde bei 0 bis 5 °C und pH 6 bis 7. Anschließend läßt man die Temperatur auf 15 bis 20 °C ansteigen und hält dabei den angegebenen pH ein. Die resultierende Lösung kann in üblicher Weise diazotiert werden.

Weitere wertvolle Reaktivfarbstoffe, die Baumwolle in den in Tabelle 1, Spalte 5, angegebenen Farbtönen färben, werden erhalten, wenn man gemäß den Angaben in Beispiel 1 die in Spalte 2 angegebene diazotierte Diazokomponente sauer auf die in Spalte 3 angegebene Kupplungskomponente kuppelt und auf die so erhaltene Monoazoverbindung die in Spalte 4 angegebene diazotierte Diazokomponente kuppelt.

| Beispiel | | | | |
|---|---|---|---|---|
| 2 | 2-Amino-naphthalin-6-β-sulfatoethylsulfon | K-Säure | 2-Fluor-4-(2′5′-disulfo-phenylamino)-6-(3″-amino-4″-sulfo-phenylamino)-triazin | marineblau |
| 3 | 2-Amino-naphthalin-6-β-sulfatoethylsulfon | H-Säure | 2-Fluor-4-(2′-sulfo-phenylamino)-6-(3″-amino-4″-sulfo-phenylamino)-triazin | marineblau |
| 4 | 2-Amino-naphthalin-6-β-sulfatoethylsulfon | K-Säure | 2-Fluor-4-(2′-sulfo-phenylamino)-6-(3″-amino-4″-sulfo-phenylamino)-triazin | rotstichig marineblau |

**Patentansprüche**

1. Diazoreaktivfarbstoffe der Formel

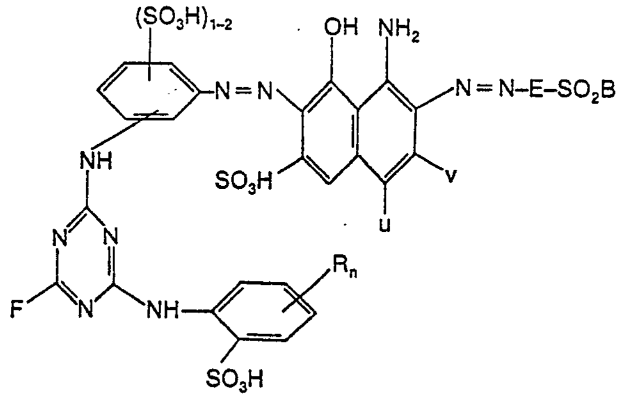

(1)

worin

B = $CH=CH_2$ oder $CH_2CH_2Z$, worin Z = abspaltbare Gruppe,

u, v = H oder $SO_3H$, wobei u $\neq$ v,

R = Cl, Br, $C_1$–$C_4$-Alkyl, $C_1$–$C_4$-Alkoxy, COOH, $SO_3H$, $NHCOCH_3$, $SO_2CH_2CH_2OSO_3H$,

n = 0, 1 oder 2

E = 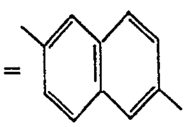

2. Farbstoffe des Anspruchs 1 der Formel

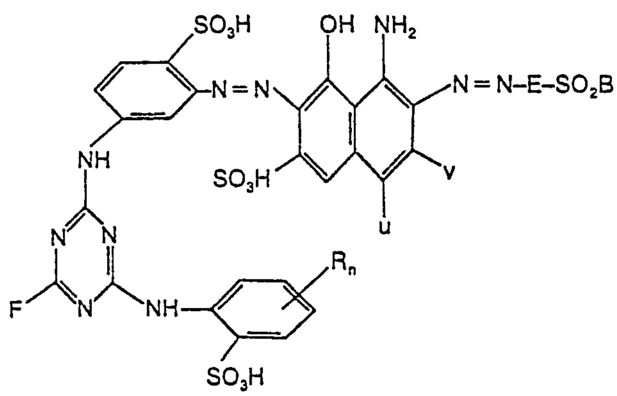

(3)

3. Farbstoffe der Ansprüche 1 und 2 mit

B = $CH_2CH_2OSO_3H$,

u = H,

v = $SO_3H$.

4. Verwendung der Farbstoffe der Ansprüche 1 bis 3 zum Färben und Bedrucken von Hydroxylgruppen oder Amidgruppen enthaltenden Materialien.

5. Mit den Farbstoffen der Ansprüche 1 bis 3 gefärbte oder bedruckte, Hydroxylgruppen oder Amidgruppen aufweisende Materialien.

**Claims**

1. Reactive disazo dyestuffs of the formula

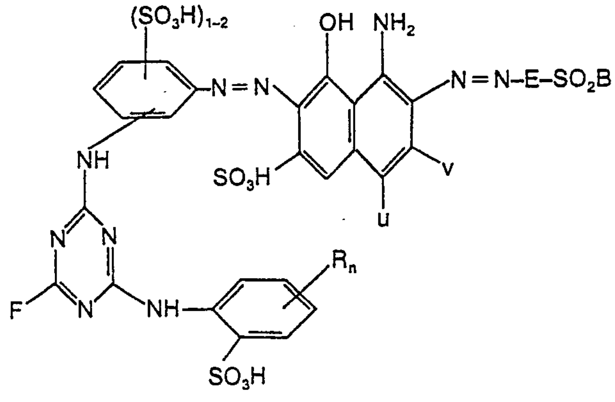

(1)

wherein

B = $CH=CH_2$ or $CH_2CH_2Z$, wherein Z ≠ a group which can be eliminated,

u and v = H or $SO_3H$, with u = v,

R = Cl, Br, $C_1$–$C_4$-alkyl, $C_1$–$C_4$-alkoxy, COOH, $SO_3H$, $NHCOCH_3$, $SO_2CH_2CH_2OSO_3H$,

n = 0, 1 or 2

E =

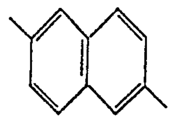

2. Dyestuffs of Claim 1, of the formula

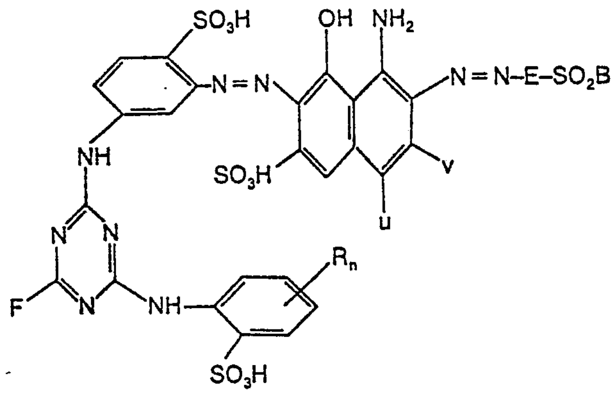

(3)

3. Dyestuffs of Claims 1 and 2, with

B = $CH_2CH_2OSO_3H$,

u = H and

v = $SO_3H$.

4. Use of the dyestuffs of Claims 1 to 3 for the dyeing and printing of materials containing hydroxyl groups or amide groups.

5. Materials, containing hydroxyl groups or amide groups, which have been dyed or printed with the dyestuffs of Claims 1 to 3.

**Revendications**

1. Colorants disazoïques réactifs, de formule:

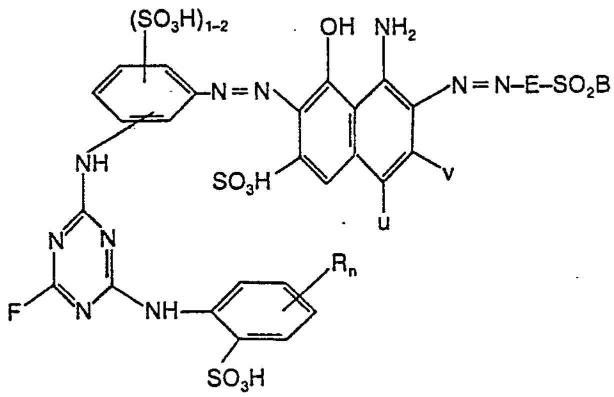

(1)

dans laquelle

B représente un groupe $CH=CH_2$ ou $CH_2CH_2Z$, où Z représente un groupe scindable ou partant,

u et v représentent chacun H ou $SO_3H$, u étant différent de v,

R représente un atome de Cl ou de Br, un groupe alkyle en $C_1$–$C_4$, alcoxy en $C_1$–$C_4$, COOH, $SO_3H$, $NHCOCH_3$ ou $SO_2CH_2CH_2OSO_3H$,

n vaut 0, 1 ou 2,

E représente un groupe

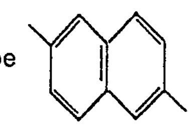

2. Colorants selon la revendication 1, répondant à la formule:

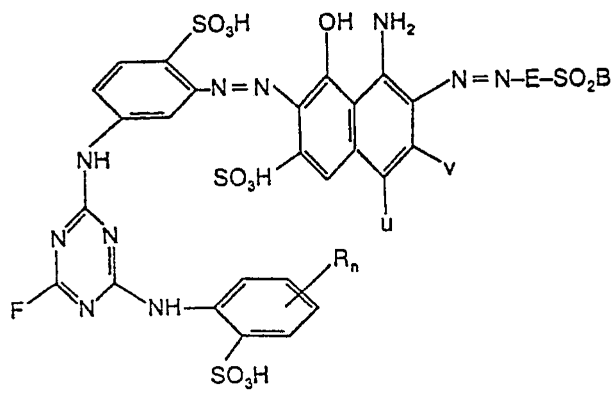

(3)

3. Colorants selon la revendication 1 ou la revendication 2, dans lesquels
B = $CH_2CH_2OSO_3H$,
u = H,
v = $SO_3$ H.

4. Utilisation des colorants selon les revendications 1 à 3 pour teindre et imprimer des matières contenant des groupes hydroxyles ou contenant des groupes amides.

5. Matières présentant des groupes hydroxyles ou des groupes amides, teintes ou imprimées à l'aide des colorants selon les revendications 1 à 3.